# EUROPÄISCHE PATENTSCHRIFT

(11) **EP 3 510 203 B1**
(45) Veröffentlichungstag und Bekanntmachung des Hinweises auf die Patenterteilung: **28.10.2020**
(21) Anmeldenummer: 17764374.9
(22) Anmeldetag: 06.09.2017
(51) Int. Cl.: E03B 3/08, B65G 5/00

(54) **VERFAHREN ZUR HERSTELLUNG EINES WASSERSPEICHERS**
METHOD OF FORMING A WATER STORAGE DEVICE
PROCÉDÉ DE FABRICATION D'UN RESERVOIR D'EAU

(30) Priorität: 12.09.2016 EP 16188381
(43) Veröffentlichungstag der Anmeldung: 17.07.2019
(73) Patentinhaber: MLW-intermed Handels- und Consultinggesellschaft für Erzeugnisse und Ausrüstungen des Gesundheits- und Bildungswesens mbH, 15566 Schöneiche bei Berlin (DE)
(72) Erfinder: GEORGI, Olaf, 03044 Cottbus (DE); BLUMENSTEIN, Oswald, 14482 Potsdam (DE); SCHMIDT, Norbert, 15370 Fredersdorf/Vogelsdorf OT Vogelsdorf (DE)
(74) Vertreter: Kailuweit & Uhlemann Patentanwälte Partnerschaft mbB
(86) Internationale Anmeldenummer: PCT/EP2017/072299
(87) Internationale Veröffentlichungsnummer: WO 2018/046517

(56) Entgegenhaltungen:
- EP-A1- 0 819 834
- WO-A1-95/10689
- US-A- 3 704 593

## Beschreibung

Gegenstand der vorliegenden Erfindung ist ein Verfahren, um Wasserspeicher in Gegenden mit Trinkwassermangel schnell und kostengünstig herzustellen.

Wasserspeicher, die in den Boden eingelassen sind, kennt die Menschheit seit vielen Jahrtausenden. Dabei handelt es sich häufig um Zisternen, die aus dem Fels oder dem Grundgestein herausgehauen oder die als ausgemauerte Gruben angelegt sind. Diese Zisternen dienen der Sammlung und Aufbewahrung von Niederschlagswasser. Kennzeichnend ist, dass diese Wasserspeicher, im Gegensatz zu Brunnen, keine direkte Verbindung zum Grundwasserleiter aufweisen.

Auch in neuerer Zeit werden Zisternen genutzt. Dies erfolgt häufig, um jahreszeitliche Schwankungen des Wasserangebots zu kompensieren oder um Brauchwasser bereit zu stellen. In den Industrienationen kommen dazu häufig in die Erde versenkte Tanks zum Einsatz (bspw. DE 20 2013 004 054 U1).

Bekannte Konstruktionen sehen dabei häufig vor, auf einer wasserundurchlässigen Grundschicht Sperrvorrichtungen zu errichten, die den horizontalen Wassertransport unterbinden oder weitgehend reduzieren sollen. Beispiele für derartige Anordnungen finden sich in der US 4,326,818 B1 oder der US 8,449,219 B2.

Kennzeichnend für die Konstruktionen, die künstlich errichtete Wände oder Tanks zur Wasserspeicherung aufweisen ist, dass bei der Errichtung sehr große Erdmengen bewegt werden müssen und dass häufig schweres Gerät und Hochtechnologie zum Einsatz kommen müssen. Die Konstruktionen und die Verfahrensweisen zu deren Errichtung sind somit nicht für Entwicklungsländer oder sonstige Gegenden mit ausgesprochen schwacher Infrastruktur geeignet. Es stellt sich somit die Aufgabe, ein Verfahren vorzuschlagen, dass es ermöglicht, mit geringem Technikeinsatz und unter Nutzung vorhandener Ressourcen Zisternen für die einheimische Bevölkerung in Entwicklungsländern und anderen schwach entwickelten Gebieten mit geringem Niederschlag zu errichten.

Erfindungsgemäß wird die Aufgabe mit dem Verfahren nach Anspruch 1 gelöst. Vorteilhafte Verfahrensweisen sind in den rückbezogenen Unteransprüchen offenbart.

Das Verfahren bedarf einer geeigneten Struktur des Untergrundes. Dieser muss aus mehreren Lagen von Bodenmaterial bestehen, die geeignete Eigenschaften aufweisen. Dabei kann jede Lage aus unterschiedlichen Schichten bestehen, wobei diese unterschiedlichen Schichten sich in den für die jeweilige Lage kennzeichnenden Eigenschaften zumindest ähneln müssen.

Die erste Lage ist die Decklage und steht oberflächig oder zumindest oberflächennah an. Sie soll aus Schichten von porösem, wassergängigem Material bestehen. Vorzugsweise ist dieses Material auch bereits lose. Geeignet sind bspw. Schichten aus Sand oder Geröll.

Vertikal absteigend soll sich unter der ersten Lage eine zweite Lage befinden, die aus Schichten besteht, die mittels eines geeigneten ungiftigen Lösungsmittels bzw. eines Gemischs derartiger Lösungsmittel aufgelöst und in einen pumpfähigen Zustand versetzt werden können. Beispielsweise kann es sich dabei um Kalkstein oder Kalksandstein handeln.

Bei den ungiftigen Lösungsmitteln handelt es sich vorzugsweise um bereits in der Natur vorkommende Stoffe. So sind bspw. Säuren geeignet, die beim Auflösen des Materials der zweiten Lage neutralisiert werden. Wesentlich ist, dass das Lösungsmittel das Material der Schichten der dritten Lage nicht oder nur geringfügig angreift und dass seine Verwendung dem Ansatzes einer nachhaltigen Technologie genügt. Es sind demzufolge vorzugsweise Lösungsmittel zu nutzen, die
- in der Natur vorkommen,
- biologisch schnell abbaubar sind und
- keine Schädigungen von Organsimen bzw. der menschlichen Gesundheit nach sich ziehen können.
Zu verwenden sind bevorzugt Essigsäure, Ameisensäure oder Kohlensäure.
Bei Verwendung von Kohlensäure kann diese optional zusätzlich mit Kohlenstoffdioxid angereichert werden. Die Nutzung dieser freien überschüssigen Kohlensäure hat den Vorteil, dass diese nach dem Auspumpen ohne technologischen Aufwand wieder verwendet und der ausgefällte Kalk weiter verwertet werden können. Möglich ist auch der Einsatz von Salzsäure, wobei jedoch die Entsorgung so erfolgen sollte, dass keine Säure unkontrolliert freigesetzt wird. Weiterhin bevorzugt ist ein Zusatz von geeigneten Stoffen, die in Kombination mit dem eingesetzten Lösungsmittel positive Wirkungen entfalten. Dies betrifft insbesondere das Verhindern unerwünschter Kristallisation im gelösten Material oder die Beschleunigung des Abbauprozesses. Als geeignet haben sich bspw. NaCI und Kohlendioxid in Verbindung mit Ameisensäure als Lösungsmittel erwiesen.

Die für den jeweiligen Standort am besten geeignete Kombination von Lösungsmittel und Zusatzstoffen hängt von den lokalen Gegebenheiten des Errichtungsortes des Wasserspeichers ab. Sie wird vorzugsweise in einfachen Vorversuchen bestimmt oder aufgrund des allgemeinen Standes der Technik oder von Erfahrungswerten gewählt.

Vertikal unterhalb der zweiten Lage soll sich eine dritte Lage befinden, die aus Schichten besteht, die nicht oder nur gering wasserdurchlässig sind. Hier sind bspw. Lehm oder Tonschichten oder auch anstehendes Felsgestein geeignet. Die Wasserundurchlässigkeit kann als ausreichend gering angesehen werden, wenn während der zu erwartenden maximalen Abstände zwischen den Wassernachlaufereignissen weniger als 50% des Wasserinhaltes des Wasserspeichers verloren gehen.

Wenn ein Gebiet mit geeignetem Untergrund aufgefunden wurde, wird mindestens eine Bohrung niedergebracht (vorhergehende Erkundungsbohrungen sind sicher meist notwendig, werden hier jedoch als nicht unmittelbar zum Verfahren gehörend vorausgesetzt, aber nicht näher angeführt). Die Bohrung reicht bis in die zweite Lage, bevorzugt bis in einen Bereich zwischen dem Ende des oberen Drittels der zweiten Lage und dem unteren Ende der zweiten Lage, ganz besonders bevorzugt bis zum Beginn des unteren Drittels der zweiten Lage.

In das Bohrloch der Bohrung wird eine Rohrleitung eingeführt. In einer bevorzugten Ausführungsform wird der Bohrer nach Entfernung des Bohrkernes als Rohrleitung genutzt. Diese Rohrleitung weist am unteren Ende vorzugsweise eine oder mehrere Öffnungen auf, Durch diese Öffnungen kann über Tage in die Rohrleitung eingefülltes bzw. eingepumptes Lösungsmittel in die Bohrung eingebracht werden. Das Lösungsmittel versetzt im Zuge einer chemischen oder physikalischen Reaktion das Material der Schichten der zweiten Lage in einen flüssigen, pumpfähigen Zustand.

Nach einer Einwirkungszeit, die für das hinreichende Verflüssigen des Materials der Schichten der zweiten Lage notwendig ist, wird das verflüssigte Material vorzugsweise durch die Rohrleitung in der Bohrung, durch die bereits das Lösungsmittel eingebracht wurde, abgepumpt. Die Einwirkungszeit ist von den Eigenschaften der Materialien der Schichten der zweiten Lage abhängig. Sie ist daher im Labor mit Verfahren nach dem Stand der Technik zu ermitteln, indem die Löse- bzw. Ätzgeschwindigkeit bestimmt wird.

Eine weitere bevorzugte Ausführungsform des Verfahrens sieht das Abpumpen durch zusätzliche Bohrungen mit geeigneten Rohrleitungen vor. Diese Vorgehensweise ermöglicht es, den Auflösungsfortschritt in der zweiten Lage zu überwachen und zu steuern.

Die aus der Tiefe abgepumpte Suspension wird an die Erdoberfläche in ein Absetzbecken geleitet, in welchem sich die Inhaltsstoffe infolge Ihrer Schwerkraft und/oder Ausfällungsprozessen absetzen. Somit kann das das bereits genutzte Wasser bzw. Lösungsmittel vorteilhaft wieder verwendet werden. Auch das Material des Absetzbeckens kann einer Weiterverwertung zugeführt werden, so z.B. als Dünger.

Durch das Auflösen und Abpumpen des Materials der Schichten der zweiten Lage entsteht ein Hohlraum unterhalb der ersten Lage und oberhalb der dritten Lage. Dieser Hohlraum kann selbstverständlich noch Reste der zweiten Lage enthalten.

In einer ersten bevorzugten Verfahrensweise ist dies wünschenswert, um ein Einstürzen des Hohlraumes vor dem Erreichen von dessen angestrebter Ausdehnung zu vermeiden.

In einer zweiten bevorzugten Verfahrensweise, die zum Einsatz kommen kann, wenn die Schichten der ersten Lage aus besonders gut wasserwegsamem Material bestehen, kann ein fortlaufender Einsturz des Hohlraumes, der mit dem Aushöhlen der zweiten Lage stetig voranschreitet, geduldet werden.

In einer bevorzugten Verfahrensweise wird nach dem Abpumpen des herausgelösten Materials der zweiten Schicht der entstandene Hohlraum mit Wasser gespült. Bevorzugt erfolgt die Spülung mehrfach, wobei es sich als vorteilhaft erwiesen hat, die ersten Spülgänge mit einem Zusatz eines Mittels durchzuführen, dass das Lösungsmittel neutralisiert bzw. die Lösungsfähigkeit des Lösungsmittels auf andere Weise beendet. Dies verhindert ein schleichendes Herauslösen weiteren Materials der zweiten Lage.

Wenn der Hohlraum in der angestrebten Ausdehnung vorliegt, kann dieser aufgrund seines natürlichen Gewichts einstürzen oder technisch zum Einsturz gebracht werden. Dazu ist im einfachsten Fall eine Sprengung geeignet. Auch das Auflegen von zusätzlichem Geröll oder Sand auf den Hohlraum kann dessen Einsturz befördern. Darüber hinaus ist es möglich, den Einsturz durch das Einbringen zusätzlicher Bohrungen, die vorzugsweise bis in den Hohlraum oder bis in dessen Nähe reichen, zu befördern.

Abschließend wird mindestens im Scheitelpunkt des Einsturztrichters eine Bohrung abgesenkt und eine Wasserentnahme-Rohrleitung in die Bohrung eingesetzt. Weitere Wasserentnahmebohrungen sind optional möglich. Die Wasserentnahmebohrung kann mittels einer Pumpe Wasser entnehmen. Möglich ist jedoch auch eine brunnenartige Ausgestaltung, bei der die Wasserentnahmebohrung mit einem Rohr hinreichenden Durchmessers ausgekleidet wird, an dessen unterem Ende das Wasser in das Rohr eintreten kann. Vorzugsweise weist dieses dazu zusätzliche Zulauföffnungen auf. Am oberen offenen Ende kann dann bspw. eine manuelle Schöpfkonstruktion errichtet werden.

Nunmehr sammelt sich das Niederschlagswasser im Einsturztrichter und dringt in die Hohlräume des nach dem Einsturz grobkörnigen Materials der eingestürzten ersten Schicht ein. In diesen Hohlräumen ist das Wasser weitgehend der natürlichen Verdunstung entzogen und kann am tiefsten Punkt, dem Scheitelpunkt, entnommen werden. Beim Vorhandensein weiterer Wasserentnahmebohrungen und bei ausreichendem Wasserstand ist natürlich auch dort eine Entnahme möglich.

In einer bevorzugten Ausführungsform wird zusätzlicher Sand oder anderes grobkörniges Material in den Einsturztrichter eingebracht, so dass zumindest teilweise aufgefüllt ist. Auf diese Weise kann die Füllhöhe ohne Erreichen der Bodenoberfläche (Verdunstung) des Wasserspeichers vergrößert werden.

In einer bevorzugten Verfahrensweise wird, falls kein natürlicher Grundwasserleiter vorhanden ist, der seitliche Abfluss des gesammelten Wassers vollständig oder teilweise verhindert, indem geeignete Barrieren errichtet werden. Dies erfolgt bevorzugt durch die Injektion von Material, das die Wasserwegsamkeit im Randbereich des Einsturztrichters verringert. Dazu können über Bohrungen bspw. flüssiger Zement oder Tonsuspensionen, bevorzugt Bentonitsuspensionen, genutzt werden.

Wenn der Einsturztrichter bis in den Bereich des Grundwasserleiters reicht bzw. wenn ein Grundwasserleiter vorhanden ist, ist dieser durch das erfindungsgemäße Verfahren leicht zugänglich.

Legt man das durchschnittliche Porenvolumen von Mittelsand zugrunde und dass mindestens ein Drittel dieses Volumens der Wasserspeicherung zur Verfügung steht, reichen eine Fläche von 3,0 m x 3,0 m und eine Tiefe des Hohlraums von 2 m aus, um 6000 l Wasser zu speichern. Dies entspricht genau der Menge, die z. B. in Südafrika ein Haushalt im Monat an Wasser verbraucht.

Da die meisten Farmer in Trockengebieten über immense Nutzflächen verfügen, kann durch die Anwendung dieses Verfahrens an verschiedenen Standorten der Verbrauch nicht erneuerbarer Wasserressourcen deutlich reduziert werden.

### Figuren

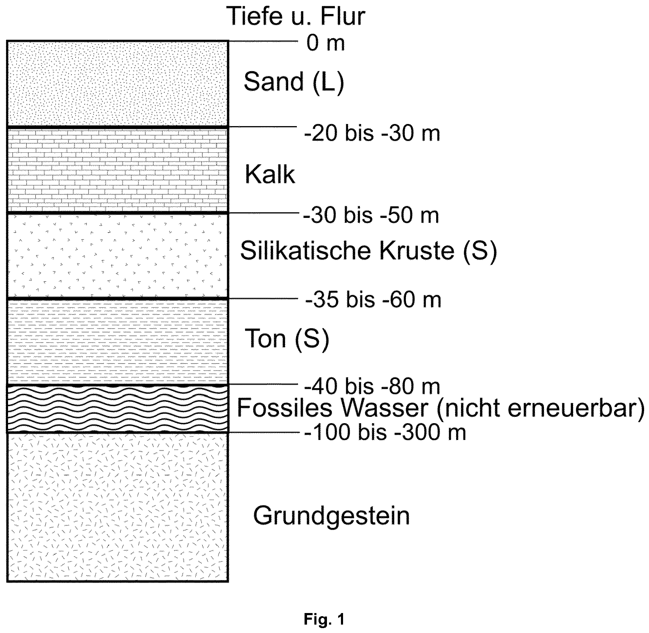

**Fig. 1** zeigt ein Beispiel für die Schichtungsverhältnisse eines geeigneten Errichtungsortes für einen Wasserspeicher mit dem erfindungsgemäßen Verfahren.

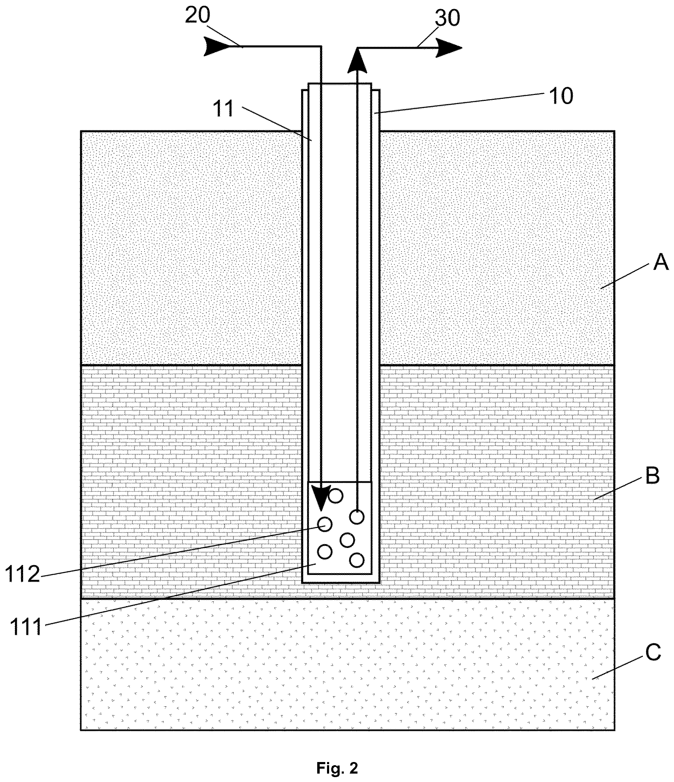

**Fig. 2** zeigt schematisch, wie ein Rohr zum Einspeisen bzw. Abpumpen des Lösungsmittels in einer Bohrung, die bis in die zweite Lage hinabreicht, angeordnet ist.

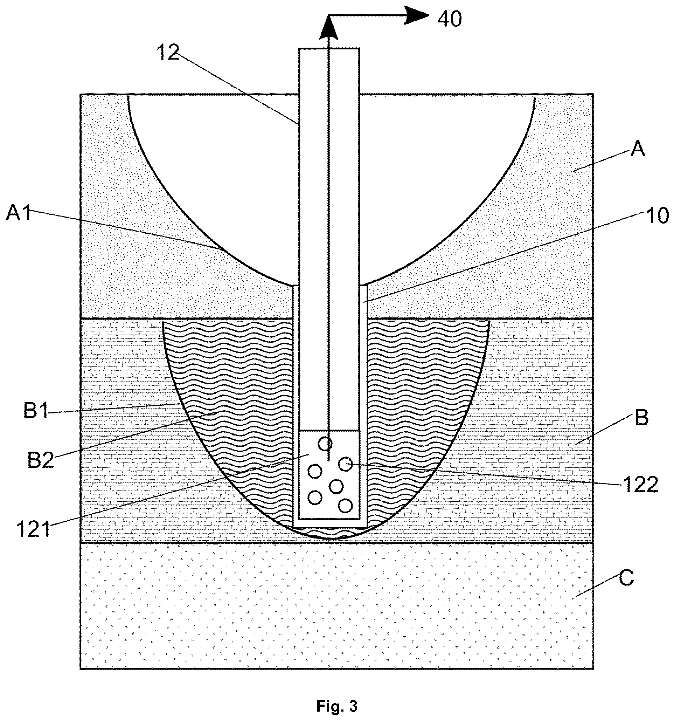

**Fig. 3** zeigt schematisch die Verhältnisse, die sich im Ergebnis der Durchführung des erfindungsgemäßen Verfahrens einstellen.

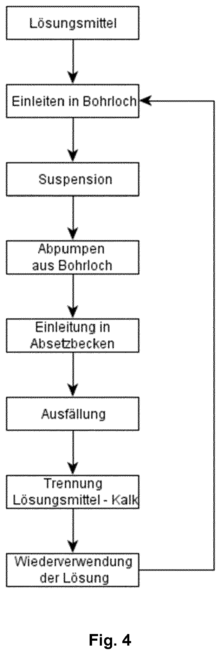

**Fig. 4** erläutert die wesentlichsten Schritte eines Lösungsmittelkreislaufes, wie er vorzugsweise in dem erfindungsgemäßen Verfahren zum Einsatz kommt.

### Ausführungsbeispiel

Eine geologische Vorerkundung hat einen potentiellen Errichtungsort für einen Wasserspeicher nach dem erfindungsgemäßen Verfahren aufgefunden. Einer ca. 20 m dicken Sandschicht folgt absteigend eine Kalksteinschicht mit einer Mächtigkeit von ca. 25 m, die auf einer Granitschicht aufliegt. An diesem potentiellen Errichtungsort wird eine Bohrung bis in eine Tiefe von 38 m niedergebracht. In das Bohrloch wird ein Rohr eingeführt, dass an der unteren Stirnseite einen Sprühkopf besitzt, d.h. Öffnungen aufweist, die zylinderförmig angeordnet sind. In dieses Rohr wird eine Lösung von 1,7 bis 4,3 molarer Essigsäure oder 2,7 bis 6,8 molare Ameisensäure zugeführt, in Mischung mit einer NaCI-Salzlösung (35 g pro Liter). Die Molarität der Säure in dem Fluid richtet sich nach der Qualität des Kalksteinmaterials, die von seiner chemischen Zusammensetzung und Dispersivität bestimmt wird. Da der Lösungsprozess des Kalksteins fortschreitet, wird beim Absinken des Lösungsmittelspiegels im Rohr Lösungsmittel nachgespeist. Die zu verwendete Menge richtet sich nach der Größe des Sprühkopfes und des Bohrlochdurchmessers. Die Messung der Höhe des Flüssigkeitspegels im Bohrloch wird elektrometrisch durch einen Sensor vorgenommen. Eine Zuführung von gasförmigem Kohlenstoffdioxid (CO₂) dient der Vermeidung einer Kristallbildung und beschleunigt den Lösungsvorgang, ebenso die zugemischte Salzlösung. Die Länge der Kontaktzeit ist von der chemischen Zusammensetzung des Gesteins abhängig. Sie endet, wenn der pH-Wert in der eingebrachten Lösung stark ansteigt. Bei einem pH-Wert von 5,0 ist die Intensität des Prozessablaufes zeitökonomisch nicht mehr vertretbar. Der Nachweis hierfür ist durch ein pH-Meter zu erbringen. Nach ca. 10 Minuten kann das Fluid abgepumpt werden. Nunmehr wird das Lösungsmittel mit dem gelösten und partikulären Kalkstein als Suspension abgepumpt und in ein Absetzbecken eingeleitet. Hier werden die gelösten Stoffe von dem Liquid getrennt, so dass das Lösungsmittel wieder verwendet werden kann. Durch diese zyklische Prozessführung werden Säure und Wasser eingespart, was besonders in den Trockengebieten von Bedeutung ist. Da der Prozess der Phasentrennung länger als die Hohlraumerweiterung dauern kann, ist ein zweites Absetzbecken zu installieren, in welches die zweite Charge der eingebrachten Lösung hineingepumpt werden kann. Das Fassungsvermögen der Becken richtet sich nach der Menge der eingebrachten Lösungsmittel.

Da der Lösungsprozess aufgrund des Gewichtes der Lösung überwiegend nach unten bzw. seitlich wirksam wird, stürzt der Hohlraum nicht aufgrund seines Eigengewichts ein. Er wird nun noch von den verbliebenen Kalksteinresten getragen. Nach dem Entfernen des Rohres werden weitere Hohlraume in radialer Anordnung um das erste Bohrloch erzeugt. Je nach geostruktureller Stabilität der drüber liegenden Deckschichten kann dieses radiale Hohlraumsystem selbständig einstürzen bzw. kann durch geotechnische Manipulationen (z. B. durch begrenzte Sprengung) zum Einsturz gebracht werden. Nunmehr ist der Hohlraum mit grobstückigen Restmaterial des Kalksteins und Sand aus der darüber liegenden Sandschicht gefüllt. Zwischen den Kalksteinbrocken bzw. den Sandkörnern kann sich nach einem typischen Starkniederschlag eine erhebliche Wassermenge sammeln. Das bei Niederschlägen oder Überschwemmungsereignissen anfallende Wasser gelangt, befördert durch die Trichterwirkung des Einsturztrichters, in die in die Hohlräume zwischen den Kalksteinbrocken bzw. den Sandkörnern. Ein weiteres Versickern des Wassers wird durch die Granitschicht verhindert. An der Oberfläche entsteht ein Einsturztrichter. Das gesammelte Wasser in der Tiefe wird durch das darin befindliche Lockermaterial an der Verdunstung gehindert. Am tiefsten Punkt des Einsturztrichters werden eine erneute Bohrung und in das entstehende Bohrloch ein Wasserentnahmerohr eingebracht. Das Wasser kann nunmehr über das Wasserentnahmerohr bei Bedarf abgepumpt werden.

### Bezugszeichenliste

- 10: Bohrung
- 11: Rohrleitung zum Einspeisen und Abpumpen des Lösungsmittels
- 111: unteres Ende der Rohrleitung zum Einspeisen und Abpumpen des Lösungsmittels
- 112: Austritts- bzw. Eintrittsöffnungen für das Lösungsmittel
- 12: Rohrleitung zur Wasserentnahme
- 121: unteres Ende der Rohrleitung zur Wasserentnahme
- 122: Eintrittsöffnungen für Wasser
- 20: Lösungsmittelzuführung
- 30: Lösungsmittelabführung
- 40: Wasserabführung
- A: Sandschicht
- A1: Einsturztrichter in der Sandschicht
- B: Kalksteinschicht
- B1: eingestürzter, wasserwegsamer Hohlraum in der Kalksteinschicht
- B2: Wasser, dass sich in der losen Schüttung des Hohlraumes gesammelt hat
- C: Gesteinsschicht

## Patentansprüche

1. Verfahren zur Schaffung eines mit losem, porösem wassergängigem Material aufgefüllten Wasserspeichers, aufweisend mindestens die folgenden Schritte:
a) Auffinden eines geeigneten Errichtungsortes, der eine Gesteinsschichtung mit:
∘ einer ersten Lage aus mindestens einer Schicht porösen Materials,
∘ einer zweiten Lage, unterhalb der ersten Lage, aus mindestens einer durch ungiftige Lösungsmittel lösbaren Materialschicht,
∘ einer dritten Lage, unterhalb der zweiten Lage, aus mindestens einer Schicht wasserundurchlässigen oder nahezu wasserundurchlässigen Materials,
b) Absenken mindestens einer Bohrung bis in die zweite Lage,
c) Einführen einer Rohrleitung mit einem oder mehreren Austrittsöffnungen am unteren Ende der Rohrleitung in die Bohrung,
d) Injizieren eines ungiftigen Lösungsmittels, das geeignet ist, das Material der zweiten Lage zu lösen oder auf sonstige Weise in einen flüssigen, pumpfähigen Zustand zu versetzen,
e) Abpumpen der in flüssigem, pumpfähigen Zustand befindlichen Teile der zweiten Lage und dadurch Schaffung eines Hohlraums,
f) Natürliches oder induziertes Einstürzen des Hohlraumes und Ausbildung eines Einsturztrichters an der Erdoberfläche,
g) Absenken einer Bohrung im Scheitelpunkt des Einsturztrichters und Einsetzen einer Wasserentnahme-Rohrleitung in die Bohrung.

2. Verfahren nach Anspruch 1, **dadurch gekennzeichnet, dass** die Bohrung in Schritt b) bis in eine Tiefe zwischen dem Ende des oberen Drittels der zweiten Lage und dem unteren Ende der zweiten Lage niedergebracht wird.

3. Verfahren nach Anspruch 1 oder 2, **dadurch gekennzeichnet, dass** in Schritt c) der Bohrer nach Entfernung des Bohrkernes als Rohrleitung genutzt wird.

4. Verfahren nach einem der Ansprüche 1 bis 3, **dadurch gekennzeichnet, dass** die Schritte d) und e) so oft wiederholt werden, bis der entstehende Hohlraum die angestrebte Größe erreicht hat.

5. Verfahren nach einem der Ansprüche 1 bis 4, **dadurch gekennzeichnet, dass** als Lösungsmittel Salzsäure, Essigsäure, Ameisensäure oder Kohlensäure zum Einsatz kommt.

6. Verfahren nach einem der Ansprüche 1 bis 5, **dadurch gekennzeichnet, dass** die abgepumpte Suspension aus Lösungsmittel und Material der zweiten Lage an der Erdoberfläche in ein Absetzbecken geleitet wird, in welchem sich die Inhaltsstoffe infolge Ihrer Schwerkraft und/oder von Ausfällungsprozessen absetzen.

7. Verfahren nach Anspruch 7, **dadurch gekennzeichnet, dass** das Wasser bzw. Lösungsmittel nach dem Absetzen erneut in das Bohrloch eingeleitet wird.

8. Verfahren nach einem der Ansprüche 1 bis 7, **dadurch gekennzeichnet, dass** nach dem Abpumpen des herausgelösten Materials der zweiten Schicht der entstandene Hohlraum einmal oder mehrfach mit Wasser, bei Bedarf mit einem Zusatz eines Mittels, welches das Lösungsmittel neutralisiert bzw. die Lösungsfähigkeit des Lösungsmittels auf andere Weise beendet, gespült wird.

9. Verfahren nach einem der Ansprüche 1 bis 8, **dadurch gekennzeichnet, dass** in Schritt f) das Einstürzen des Hohlraumes durch
∘ Sprengung, oder
∘ durch Belastung der Deckschicht mit Geröll, Sand oder sonstigem porösem Material, oder
∘ durch das Einbringen zusätzlicher Bohrungen erfolgt.

10. Verfahren nach einem der vorhergehenden Ansprüche, **dadurch gekennzeichnet, dass** der nach Schritt f) ausgebildete Einsturztrichter zumindest teilweise mit Geröll, Sand oder sonstigem porösem Material aufgefüllt wird.

## Claims

1. Method for creating a reservoir filled with loose, porous, hydraulically conductive material, comprising at least the following steps:
a) finding a suitable construction site, which has rock stratification having:
∘ a first stratum of at least one layer of porous material,
∘ a second stratum, beneath the first stratum, of at least one material layer that is soluble in non-toxic solvents,
∘ a third stratum, beneath the second stratum, of at least one layer of water-impermeable or practically water-impermeable material,
b) sinking at least one borehole as far as to the second stratum,
c) inserting into the borehole a pipeline having one or more outlet openings at the bottom end of the pipeline,
d) injecting a non-toxic solvent capable of dissolving the material of the second stratum or of otherwise changing said material into a fluid, pumpable state,
e) pumping out the parts of the second stratum that are in the fluid, pumpable state, thereby creating a cavity,
f) letting the cavity collapse or causing the cavity to collapse, and forming a sinkhole at the surface,
g) sinking a borehole at the apex point of the sinkhole and placing a water draw-off pipeline in the borehole.

2. Method according to claim 1, **characterised in that**, in step b), the borehole is sunk as far as to a depth between the end of the upper third of the second stratum and the lower end of the second stratum.

3. Method according to either claim 1 or claim 2, **characterised in that**, in step c), the borer is used as a pipeline once the boring core has been removed.

4. Method according to any of claims 1 to 3, **characterised in that** steps d) and e) are repeated as often as necessary until the cavity produced has reached the desired size.

5. Method according to any of claims 1 to 4, **characterised in that** hydrochloric acid, acetic acid, formic acid or carbonic acid is used as the solvent.

6. Method according to any of claims 1 to 5, **characterised in that** the suspension of solvent and material of the second stratum pumped out to the surface is channelled into a precipitation tank, in which the contents settle due to gravity and/or due to precipitation processes.

7. Method according to claim 7, **characterised in that**, following the settling, the water or solvent is re-introduced into the bore.

8. Method according to any of claims 1 to 7, **characterised in that**, after the separated material of the second stratum has been pumped out, the cavity produced is flushed once or multiple times with water, as necessary together with the addition of an agent that neutralises the solvent or stops the dissolving power of the solvent in another way.

9. Method according to any of claims 1 to 8, **characterised in that**, in step f), the cavity is made to collapse by
∘ blasting,
∘ loading the top layer with rubble, sand or other porous material, or
∘ making additional boreholes.

10. Method according to any of the preceding claims, **characterised in that** the sinkhole formed after step f) is filled at least in part with rubble, sand or other porous material.

## Revendications

1. Procédé de fabrication d'un réservoir d'eau rempli d'un matériau en vrac, poreux et contenant de l'eau, comprenant au moins les étapes suivantes :
a) recherche d'un site de mise en place approprié qui présente une stratification de roches comportant :
∘ une première couche constituée d'au moins une couche de matériau poreux,
∘ une deuxième couche, en dessous de la première couche, constituée d'au moins une couche de matériau dissolvable par des solvants non toxiques,
∘ une troisième couche, en dessous de la deuxième couche, constituée d'au moins une couche de matériau imperméable à l'eau ou presque imperméable à l'eau,
b) perçage d'au moins un trou jusqu'à la deuxième couche,
c) insertion d'un tuyau comportant une ou plusieurs ouvertures de sortie à l'extrémité inférieure du tuyau dans le trou,
d) injection d'un solvant non toxique capable de dissoudre le matériau de la deuxième couche ou autrement, de le faire passer dans un état liquide pompable,
e) pompage des parties de la deuxième couche qui sont dans un état liquide pompable, créant ainsi une cavité,
f) effondrement naturel ou induit de la cavité et formation d'un entonnoir d'effondrement à la surface de la terre,
g) perçage d'un trou au sommet de l'entonnoir d'effondrement et insertion d'un tuyau d'extraction d'eau dans le trou.

2. Procédé selon la revendication 1, **caractérisé en ce que** le trou, à l'étape b), est foré à une profondeur comprise entre l'extrémité du tiers supérieur de la deuxième couche et l'extrémité inférieure de la deuxième couche.

3. Procédé selon la revendication 1 ou 2, **caractérisé en ce que**, à l'étape c), le foret est utilisé comme tuyau après enlèvement de la carotte de forage.

4. Procédé selon l'une quelconque des revendications 1 à 3, **caractérisé en ce que** les étapes d) et e) sont répétées jusqu'à ce que la cavité résultante ait atteint la taille souhaitée.

5. Procédé selon l'une des revendications 1 à 4, **caractérisé en ce que** l'acide chlorhydrique, l'acide acétique, l'acide formique ou l'acide carbonique est utilisé comme solvant.

6. Procédé selon l'une des revendications 1 à 5, **caractérisé en ce que** la suspension composée de solvant et de matériau de la deuxième couche, laquelle suspension est pompée à la surface de la terre, est amenée dans un bassin de sédimentation dans lequel les composants se déposent en raison de leur gravité et/ou d'opérations de précipitation.

7. Procédé selon la revendication 7, **caractérisé en ce que** l'eau ou le solvant est à nouveau introduit dans le forage après le dépôt.

8. Procédé selon l'une des revendications 1 à 7, **caractérisé en ce que**, après le pompage du matériau dissous de la deuxième couche, la cavité résultante est rincée une ou plusieurs fois à l'aide de l'eau, si nécessaire à l'aide de l'addition d'un agent qui neutralise le solvant ou autrement, met fin à la solubilité du solvant.

9. Procédé selon l'une des revendications 1 à 8, **caractérisé en ce que**, à l'étape f), l'effondrement de la cavité est effectué par
∘ explosion, ou
∘ par chargement de la couche de recouvrement de gravats, de sable ou d'un autre matériau poreux, ou
∘ par forage de trous supplémentaires.

10. Procédé selon l'une des revendications précédentes, **caractérisé en ce que** l'entonnoir d'effondrement formé après l'étape f) est au moins partiellement rempli de gravats, de sable ou d'un autre matériau poreux.
